# EUROPEAN PATENT APPLICATION

(11) **EP 2 169 584 A2**
(43) Date of publication of application: **31.03.2010**
(21) Application number: 09252329.9
(22) Date of filing: 30.09.2009
(51) Int. Cl.: G06F 21/00, H04L 29/06

(54) **Hardware-based anti-virus scan service**

(30) Priority: 30.09.2008 US 286634
(71) Applicant: Intel Corporation, Santa Clara, CA 95052 (US)
(72) Inventor: Kolar Sundar, Divya Naidu, Hillsboro, OR 97121 (US); Khosravi, Hormuzd, Portland, OR 97229 (US); Moffat, Samuel O., Portland, OR 97267 (US); Fulginiti, Dominic, Beaverton, OR 97007 (US)
(74) Representative: Beresford, Keith Denis Lewis

(57) **Abstract**

A device, system, and method are disclosed. In an embodiment, the device includes a storage medium to store files. The device also includes a manageability engine. The manageability engine accesses a virus signature file. The manageability engine then performs an anti-virus scan using patterns in the signature file to compare to one or more of the files. The manageability engine then reports the results of the scan to an external agent.

## Description

### FIELD OF THE INVENTION

The invention relates to utilizing secure hardware components within a platform to perform anti-virus scanning services.

### BACKGROUND OF THE INVENTION

There are many businesses that utilize subscription-based software applications where the user subscribes for periodic access of the application rather than purchasing the application outright. Regarding anti-virus software applications, this model is attractive to users who want to monitor their systems from rootkits and other viruses that can modify their files stored on the computer platform's storage mediums, such as a hard disk drive. In an online scanning model, the remote anti-virus service installs an agent on the local computer platform (e.g. a software application push model), which will utilize the platform's operating system services to perform the scan locally and then communicate the results to the remote entity to compare against the latest signature pattern file. This model generally produces accurate results when the agent installed by the remote entity and any underlying operating system services that are utilized for the scan have not been modified or tampered with. However this assumption is not always true, in some cases, the local agent and other components within the operating system may have been compromised, which then may compromise the results.

### BRIEF DESCRIPTION OF THE DRAWINGS

The present invention is illustrated by way of example and is not limited by the drawings, in which like references indicate similar elements, and in which:
**Figure 1** describes a system to manage out-of-band local anti-virus scanning according to several embodiments.
**Figure 2** describes a system to manage out-of-band remote anti-virus scanning according to several embodiments.
**Figure 3** is a flow diagram of a process to perform a hardware-based agent virus scan on a computer platform according to some embodiments.
**Figure 4** is a flow diagram of a process to perform a hardware-based agent-less virus scan on a computer platform according to some embodiments.
**Figure 5** describes a platform which provides secure virus pattern storage in system memory according to several embodiments.
**Figure 6** is a flow diagram of a process to provide secure virus pattern storage in system memory according to several embodiments.

### DETAILED DESCRIPTION OF THE INVENTION

Embodiments of a device, system, and method to provide a secure platform-based hardware anti-virus scanning service are disclosed.

A local computer platform includes a manageability engine that can communicate with a remote computer platform via out-of-band management. Out-of-band (OOB) management utilizes a dedicated communication channel for the management and general maintenance of devices and computer systems. OOB management through an OOB communication channel allows an administrator to monitor and manage devices and computer systems remotely. OOB management of a computer can generally take place whether or not the computer itself is powered on.

The remote computer platform may send a virus signature file that includes virus patterns to the local computer platform. The local computer platform may securely store the signature file and can use the manageability engine to perform a scan of one or more locally stored files using the provided patterns as a reference. This scan may be performed in an out-of-band and secure manner when the operating system and/or other components in the local computer platform are non-operational or otherwise potentially compromised by a malicious virus or program. The results of the scan can then be reported through the out-of-band interface to the remote computer platform.

Reference in the following description and claims to "one embodiment" or "an embodiment" of the disclosed techniques means that a particular feature, structure, or characteristic described in connection with the embodiment is included in at least one embodiment of the disclosed techniques. Thus, the appearances of the phrase "in one embodiment" appearing in various places throughout the specification are not necessarily all referring to the same embodiment.

In the following description and claims, the terms "include" and "comprise," along with their derivatives, may be used, and are intended to be treated as synonyms for each other. In addition, in the following description and claims, the terms "coupled" and "connected," along with their derivatives may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

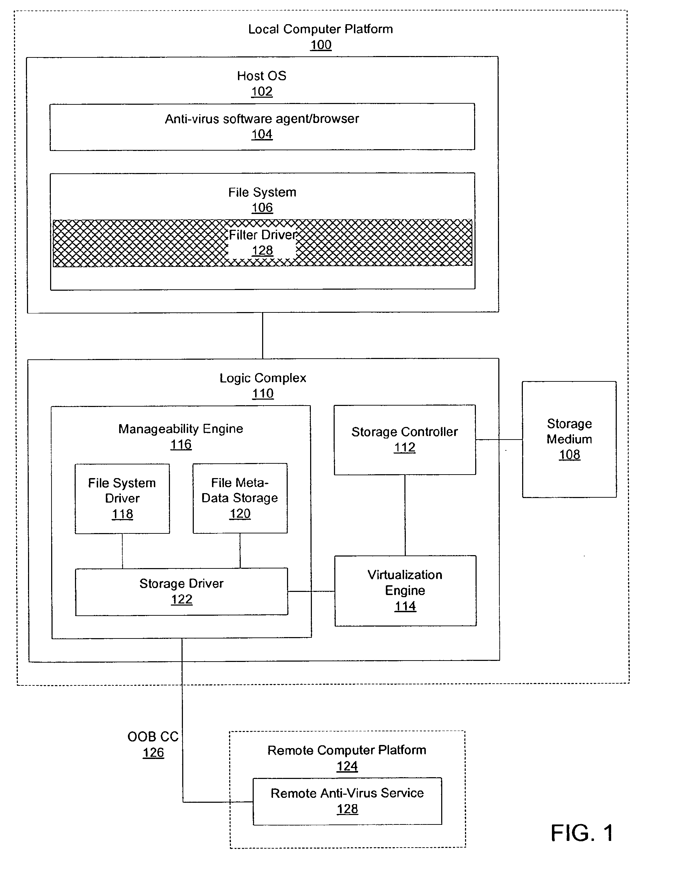

**Figure 1** describes a system to manage out-of-band local anti-virus scanning according to several embodiments. The system includes a local computer platform 100 in many embodiments. The local computer platform 100 may include one or more processors in different embodiments, such as Intel®-based central processing units. Each of the one or more processors may have one or more cores. The one or more processors within local computer platform 100 are not shown in Figure 1. Each processor is coupled to a memory subsystem to store instructions to be executed by the processor. The memory devices in the memory subsystem may be any type of volatile dynamic random access memory (DRAM), for example double data rate (DDR) synchronous DRAM, and/or any type of non-volatile memory, for example a form of Flash memory. The processor(s) is coupled to the memory by a processor-memory interface, which may be a link (i.e. an interconnect/bus) that includes individual lines that can transmit data, address, control, and other information between the processor(s) and the memory. In many embodiments, the memory subsystem hardware (i.e. the memory devices) is not shown in Figure 1.

Although the hardware of the memory subsystem is not shown, the host operating system (OS) 102 is representative of an operating system that would be loaded into the memory of the local computer platform 100 while the platform is operational to provide general operational control over the platform and any peripherals attached to the platform. The host OS 102 may be a form of Microsoft® Windows®, UNIX, LINUX, or any other functional OS. The host OS 102 provides an environment in which one or more programs, services, or agents can run within. Among the programs/agents running on the host OS 102 is an anti-virus software agent or browser (AV agent) 104. The AV agent 104 may be a proprietary program that a remote virus protection service runs on the local computer platform 100 to allow for user input and feedback regarding virus scans and reports. In some embodiments, the AV agent 104 is a service running in the background within the host OS 102 environment. In other embodiments, the AV agent is a Java, XML (extensible markup language), HTML (hypertext markup language), or other browser based web application.

Additionally, in many embodiments, the host OS 102 includes a file system 106 which provides the specific structure for how files are stored in a storage medium 108. The storage medium 108 may be one or more hard disk drives in some embodiments. In other embodiments, the storage medium 108 may be a large non-volatile memory drive. In yet other embodiments, the storage medium may be a medium such as a tape drive, optical drive, or another drive. The storage medium 108 may contain stored copies of many of the files located within the local computer platform 100. And as mentioned, the file system 106 provides a structure for how these files are stored. For example, the file system 106 may be a Microsoft® NTFS-based file system.

The logic complex 110 may include multiple integrated controllers for managing the memory subsystem and the I/O subsystem within the local computer platform 100. Each subsystem coupled to the logic complex 110 may interface with the rest of the hardware within the local computer platform 100 using one or more controllers. For example, if the storage medium 108 is a SATA (serial advanced technology attachment) hard drive, the storage controller 112 may be a SATA controller. The SATA controller provides a communication interface between the hard disk drive and the rest of the local computer platform 100. One or more drivers running within the local computer platform 100 may communicate with the storage controller 112 to access the storage medium 108.

In many embodiments, the local computer platform 100 employs a virtualization engine 114. The virtualization engine 114 allows the separation of the platform into multiple virtual platforms. The processor(s) can switch execution between these multiple virtual platforms. The virtualization engine 114 includes logic to effectively allow the rest of the local computer platform 100 (including the storage medium) to support multiple virtual platforms. The virtualization engine 114 may include a driver for the storage controller 112 in some embodiments.

The logic complex 110 also includes a manageability engine 116 in many embodiments. In different embodiments, the manageability engine may comprise a management device, management firmware, or other management logic within the local computer platform 100 to assist in remote management processes related to the platform. In many embodiments, the manageability engine is a OOB management co-processor in the computer system that runs in parallel and independently of the one or more processor(s) in the local computer platform 100.

In many embodiments, the logic complex 110 is a chipset. The chipset may include other control logic such as a memory controller to provide access to the system memory and one or more I/O controllers to provide access to one or more I/O interconnects (i.e. links/busses). In these embodiments, the manageability engine 116 is integrated into the chipset. In some embodiments, the manageability engine 116 is integrated into a memory controller hub (MCH) portion of the chipset. In other embodiments, the chipset (i.e. logic complex) is integrated into a central processor in the local computer platform.

In many embodiments, the manageability engine 116 includes logic related to mount the file system to access the files stored in the storage medium 108. The manageability engine also includes logic to access the storage medium 108 through the virtualization engine 114.

Specifically, in many embodiments, a file system driver 118 runs within the manageability engine 116. In different embodiments, the file system driver 118 may be a NTFS driver or a driver of another file system. The specific type of driver depends upon the file system utilized to store the files within the storage medium 108. The logic within the file system driver 118 is related to the file system data structures and is used to mount the file system from the storage medium into a partition. In many embodiments, the partition is located in firmware on the manageability engine 116. In other embodiments, the partition is located within another microcontroller (not shown) within the logic complex 110. In different embodiments, the microcontroller may be running an embedded operating system such as Linux or ThreadX.

The manageability engine 116 also contains a file meta-data list 120 in many embodiments. The file meta-data list 120 contains entries that map files to corresponding locations in the storage medium 108. For example, if the storage medium 108 is a hard disk drive, the file meta-data list 120 may contain entries that map files to corresponding blocks within the hard disk drive. Furthermore, in some embodiments, the file meta-data list 120 may not contain entries to all files. Rather, the list may contain entries to files that have been modified through create, destroy, open, and close operations. Thus, the list may have file entries that are or were stored within the storage medium 108 and have been in some way modified by one of the listed operations or another operation capable of modifying a file. In other embodiments, the file meta-data list may have entries for all files stored within the storage medium.

Additionally, the manageability engine 116 contains a storage driver 122 in many embodiments. The storage driver 122 may be used to communicate with the storage medium 108 through the virtualization engine 114. For example, if the manageability engine were to request to read a file from a location within the storage medium 108, the storage driver 122 may communicate the request to the virtualization engine 114, which provides an interface to the storage medium 108 by communicating with the storage controller 112 using a storage controller interface driver internal to the virtualization engine 114.

External to the local computer platform 100 is a remote computer platform 124 in many embodiments. The remote computer platform 124 may be any type of computer platform such as a desktop, laptop, workstation, server, or other computer platform in different embodiments. In many embodiments, the remote computer platform 124 is coupled to the local computer platform at least through an OOB communication channel (CC) 126. In different embodiments, the OOB communication channel may comprise an interconnect, or a wireless network. The channel provides a secure interface to send information between the local computer platform 100 and the remote computer platform 124. Due to the OOB nature of the channel, in many embodiments the OOB communication channel is capable of transporting information to and from the local computer platform when the local computer platform 100 is not in a functioning or powered state. For example, the remote computer platform 124 may send information to the local computer platform 100 across the OOB communication channel 124 which will be effectively received by the manageability engine 116 within the local computer platform 100 even when power is not being supplied to the local computer platform 100.

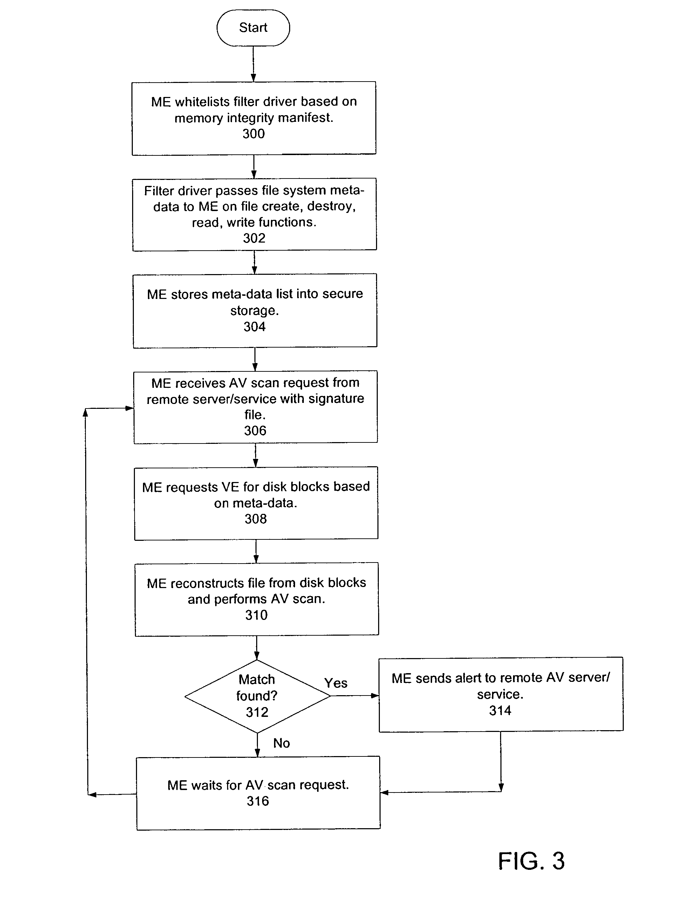

In many embodiments, the remote computer platform 124 includes a remote anti-virus service 128. In some embodiments, the remote anti-virus service provides the manageability engine one or more signature files that includes virus patterns and definitions. In many embodiments, logic within the manageability engine or elsewhere within the local computer platform may perform a scan of one or more files stored within the storage medium 108 to determine if a virus or other malicious program is present. The logic performing the scan generally needs the virus definition(s) from the signature file to compare patterns within the files to determine the presence of a virus. Thus, in some embodiments, the remote anti-virus service, either upon request or automatically at a given time, uploads the virus pattern(s) in the signature file to the manageability engine. In other embodiments, the manageability engine may directly pull the signature file from the remote anti-virus service, such as requesting an update from the remote service for the latest patterns. In many embodiments, the manageability engine comprises firmware and has firmware storage space for the virus signature file. In many other embodiments, the manageability engine does not include sufficient space to store the signature file and thus, a general memory subsystem in the local computer platform 100 may be utilized to provide storage for the signature file. Mass storage and memory subsystem storage of the signature file is discussed in detail below in relation to Figure 3.

In some embodiments, a separate partition is created for use by the manageability engine to store the signature file. In other embodiments, the manageability engine may scan a partition shared with the operating system for the location of the signature file.

Returning to Figure 1, in many embodiments, the virus scan takes place within, or locally to, the manageability engine 116, which creates an OOB virus scan scenario. For example, the remote anti-virus service 128 may upload the signature file to the manageability engine 116 firmware storage space. Then the manageability engine 116, utilizing the storage driver 122 to access the storage medium 108 through the virtualization engine 114 and the file system driver 118 to mount the file system locally for the manageability engine 116, allow the manageability engine virus scan logic to perform a virus scan on one or more files stored in the storage medium 108 without any interaction from the host OS 102. By allowing this direct access from the manageability engine 116 to the storage medium 108, the virus scan may be completed in an OOB fashion. In other words, the manageability engine 116 may perform a virus scan without the knowledge of the host OS 102 and/or when the host OS 102 has been compromised by a virus and is no longer operating securely or operating at all.

Alternatively, in other embodiments, although the virus scan takes place within, or locally to, the manageability engine 116, the files being scanned are determined based on the file-meta data storage 120 that is initially sent to the manageability engine 116 by a filter driver 130 in the host OS 102. For example, the filter driver 130 may be resident within the host OS 102 and functions as a file modification reporting mechanism. Specifically, when a file is created, destroyed, opened, close, etc., the filter driver 130 reports that file modification activity to the manageability engine 116. The manageability engine 116 is sent this meta-data, which essentially is a file modification log for files stored within the storage medium 108. The manageability engine 116 may save the meta-data in the file meta-data storage 120. Then, once the manageability engine 116 determines to run a virus scan of files within the storage medium 108, the information related to the files that have been modified since the previous scan may be stored within the file meta-data storage 120. Thus, the manageability engine 116 virus scan can be more efficient by only targeting files that potentially could have contracted a virus.

In embodiments utilizing the filter driver 130, a security protocol may be utilized to confirm that the filter driver 130 has not been compromised. For example, the manageability engine 116 may include a whitelist (i.e. a list of programs the manageability engine 116 deems as acceptable to perform this file modification monitoring service. The manageability engine 116 may check the authenticity of the filter driver 130 through a memory integrity manifest or other standard software security verification process. If the filter driver 130 fails a verification, the filter driver 130 is not given permission to send meta-data to the manageability engine 116 and the anti-virus software agent or browser application 104 running on the local computer platform and/or the remote anti-virus service 128 may be notified of the problem. If the filter driver 128 is verified, then the manageability engine 116 anti-virus scanning process may continue.

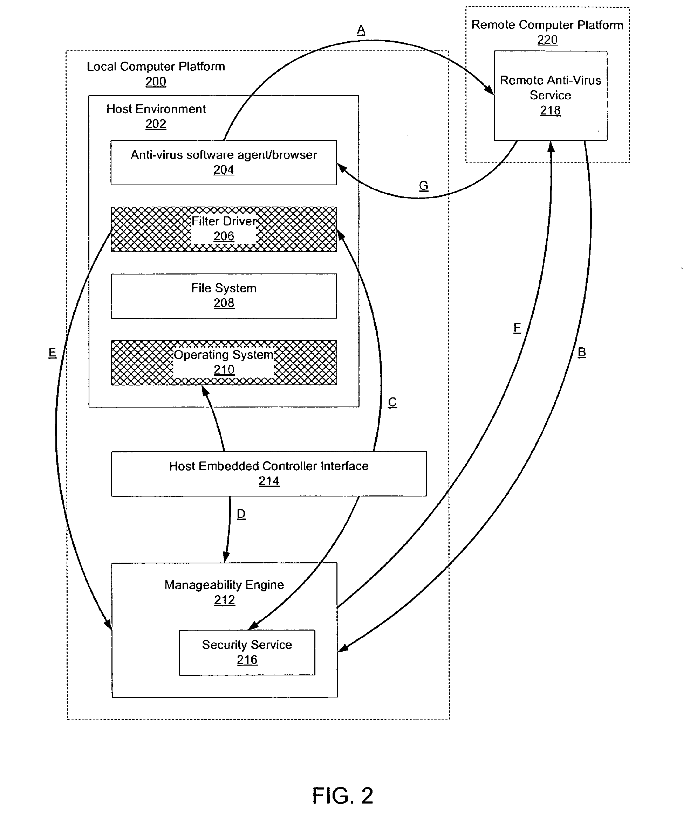

**Figure 2** describes a system to manage out-of-band remote anti-virus scanning according to several embodiments. Many of the components shown in Figure 2 are similar or the same as those shown in Figure 1. In many embodiments, a local computer platform 200 has a host environment 202. The host environment 202 includes an anti-virus software agent and/or browser application 204, a filter driver 206, a file system 208, and an operating system 210.

In many embodiments, the host environment communicates with a manageability engine 212 over a host embedded controller interface (HECI) 214. The HECI 214 allows the operating system 210 and other components within the host environment 202 to communicate directly with the manageability engine 212. System management information and events are communicated across the HECI interface. The HECI may also be referred to as the management engine interface (MEI). In other embodiments that are not shown, the host environment 202 communicates with the manageability engine 212 over another interface different from the HECI 214.

A security service 216 runs within the manageability engine to verify and measure critical OS components as well as the filter driver 206 to maintain integrity of the platform. Finally, a remote anti-virus service 218 runs on a remote computer platform 220 to provide remote virus scanning abilities, among other functions.

A remote anti-virus scanning process as shown in Figure 2 may begin with a user of the host environment 202 on the local computer platform 200 opening up a web browser 204 or other software application to communicate with the remote anti-virus service 218. The user may select a file to be scanned or select from one of a number of options to perform or schedule an automatic scan of certain file types or of certain directories.

The remote anti-virus service 218 receives this request to scan the file(s) (communication A) and forwards the request to the manageability engine 212 on the requesting machine (i.e. the local computer platform 200) (communication B). The manageability engine 212 sends the request to the filter driver 206 (communication C). In many embodiments, the filter driver 206 is protected by the security service 216 running in the manageability engine 212 (the cross-hatch represents the component(s) within the host environment that are protected by the security service 216. The security service 216 can measure the filter driver 206 to verify that the filter driver 206 has not been modified by a malicious program or virus during runtime.

The security service 216 also may measure any critical operating system components present within the host environment's OS 210 to ensure that these critical services have not been modified by any malicious code (communication D). Once all key host environment components have been verified as secure by the security service 216, the filter driver reads the file(s) in the request from the storage medium (although the storage medium is not shown in Figure 2, it is shown as item 108 in Figure 1). The information read from the storage medium is then sent from the filter driver 206 to the manageability engine 212 through the HECI 214 (communication E). The manageability engine 212 then sends the file(s) to the remote anti-virus service (communication F). Once information related to the file(s) has been received by the remote anti-virus service, the remote anti-virus service then runs a virus scan on the file(s) and computes the results as to whether each file scanned is clean or is infected. The results of the scan are then communicated to the browser 204 (communication G), which can report the results to the user who initiated the original request.

**Figure 3** is a flow diagram of a process to perform a hardware-based agent virus scan on a computer platform according to some embodiments. The process may be performed by processing logic which may be hardware (e.g. components within a general purpose computer system), software (e.g. instructions stored within a memory), or a combination of both hardware and software. Turning now to Figure 3, the process begins by processing logic in a manageability engine (ME) whitelisting a filter driver using a memory integrity manifest (processing block 300). The ME can measure the memory for at least a segment of the executable code of the filter driver. The filter driver currently running can then be measured against a known integrity check value. If the values match, then the integrity of the filter driver has been verified and the ME can whitelist the filter driver, otherwise if the values do not match the process will end and a remote service/server can be notified of the problem with the filter driver. This may indicate to the remote service/server a potential compromised state of the system.

Once the filter driver's integrity has been verified, processing logic within the filter driver will pass file system meta-data to the ME during file create, destroy, read, write, open, close, etc. functions (processing block 302). Any function that may cause a modification to the file may be targeted as a function to report related file meta-data.

Next, the ME stores the meta-data list into a secure storage location (processing block 304). In some embodiments, there may be secure storage locations for the file meta-data in firmware associated with the ME. In other embodiments, the secure storage location may be another secure microcontroller or storage device accessible by the ME.

The process continues by processing logic in the ME receiving an anti-virus (AV) scan request from a remote server or service (processing block 306). The scan request also may include a signature file that includes virus patterns to scan for.

In many embodiments, the scan is done on files stored within a hard drive. In other embodiments, the scan is done on files stored within other forms of a storage medium. In the hard drive embodiments, processing logic in the ME then requests a virtualization engine to retrieve disk blocks from the hard drive that map to the stored meta-data (processing block 308).

Processing logic in the ME then reconstructs the file from the retrieved disk blocks and performs an AV scan on the reconstructed file (processing block 310). Then processing logic in the ME determines whether a pattern in the scanned file matches with a virus pattern in the signature file (processing block 312). If a match was found, then processing logic in the ME sends an alert to the remote AV server or service (processing block 314). Once the alert has been sent, in some embodiments, processing logic in the ME waits for another scan request (processing block 316). In other embodiments, once a match has been found, the ME doesn't perform any additional scans until the detected virus has been dealt with. Otherwise, returning to block 312, if a match has not been found, then processing logic in the ME waits for another scan request (processing block 316). The process then returns to processing block 306.

In many embodiments not shown in Figure 3, processing blocks 302 and 304 continuously update the meta-data list every time a file is modified. Thus, when the process returns from block 316 to processing block 306, the meta-data list may have been updated since the previous time processing logic performed block 306.

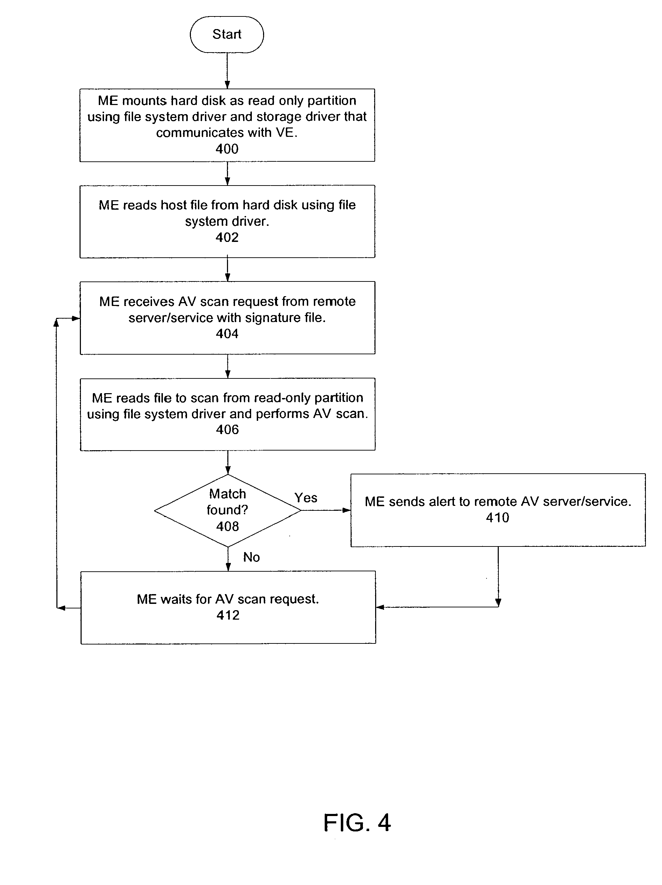

**Figure 4** is a flow diagram of a process to perform a hardware-based agent-less virus scan on a computer platform according to some embodiments. The process may be performed by processing logic which may be hardware (e.g. components within a general purpose computer system), software (e.g. instructions stored within a memory), or a combination of both hardware and software. The components discussed in the process relate to the components shown in Figures 1 and 2. Turning now to Figure 4, the process begins by processing logic in a manageability engine (ME) mounting a hard disk as a read-only partition using a file system driver and a storage driver that communicates with a virtualization engine (processing block 400). As discussed in Figure 1, the VE has access to a storage medium (which in Figure 4 comprises a hard disk drive).

Next, processing logic in the ME reads one or more files from the hard disk using the file system driver (processing block 402). Next, processing logic in the ME receives AV scan request from a remote server or service (processing block 404). The scan request also may include a signature file that includes virus patterns to scan for.

Then processing logic within the ME reads the file to be scanned from the read-only partition using the file system driver and performs an AV scan on the file (processing block 406). Then processing logic in the ME determines if a virus pattern match is found in the scanned file (processing block 408). If a match was found, then processing logic in the ME sends an alert to the remote AV server or service (processing block 410). Once the alert has been sent, in some embodiments, processing logic in the ME waits for another scan request (processing block 412). In other embodiments, once a match has been found, the ME doesn't perform any additional scans until the detected virus has been dealt with. Otherwise, returning to block 408, if a match has not been found, then processing logic in the ME waits for another scan request (processing block 412). The process then returns to processing block 404.

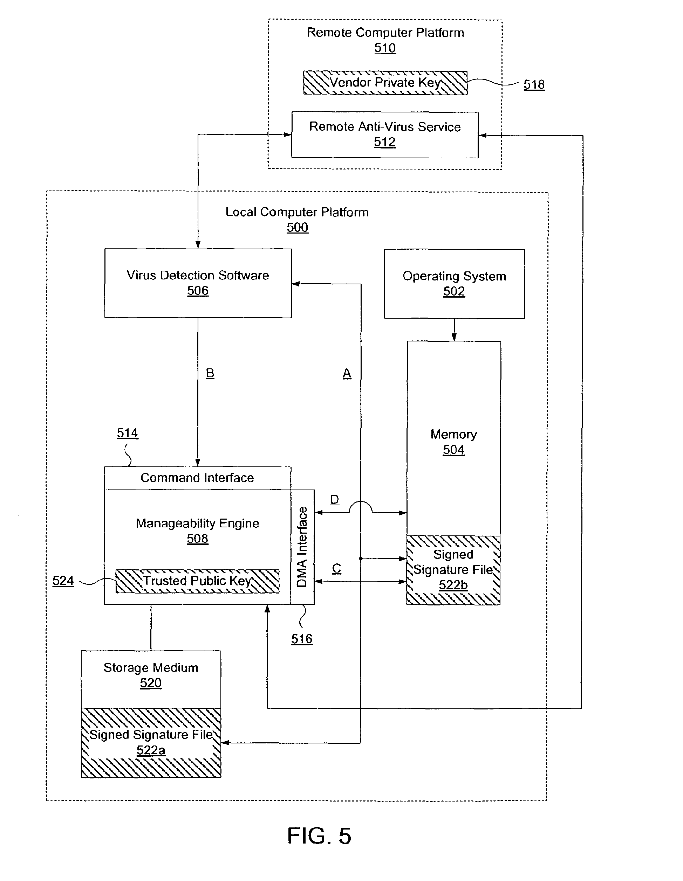

**Figure 5** describes a platform which provides secure virus pattern storage in system memory according to several embodiments. The local computer platform 500 may have the same or similar components to those on the local computer platform in Figures 1 and 2. In many embodiments, the local computer platform 500 includes an operating system 502 that provides user and system level control over a number of components. The operating system, as discussed above, may be a Microsoft® Windows®-based operating system, a Linux-based operating system, a UNIX-based operating system, or one of many other operating systems that are available.

The operating system 502 is granted access to a system memory 504. The system memory may be comprised of a type of DRAM, flash memory, or any other form of memory that can be utilized to store instructions and data for one or more processors and any other components that have access to the memory. The platform also includes virus detection software 506. In different embodiments, the virus detection software may be a software application running on top of the operating system 502, a software agent or service running in the background of the operating system, a web browser application, or any other form of software running on the local computer platform 500.

Additionally, the local computer platform 500 includes a manageability engine 508. The manageability engine 508, as discussed above in regard to Figures 1 and 2, performs many platform management tasks and may be able to operate in an OOB manner to communicate with remote computer platform 510. The remote computer platform 510 includes a remote anti-virus service 512 to provide signature file updates as well as other virus assessment help. Additionally, the manageability engine may also provide remote access to the local computer platform 500 for remote management purposes. The manageability engine 508 includes a command interface 514 which allows the manageability engine to receive commands from software agents running on the platform and remotely. Additionally, the manageability engine 508 may include a direct memory access (DMA) interface 516 to provide the manageability engine 508 direct access to system memory 504 in the platform. The DMA interface allows use of the memory 504 by the manageability engine 508 without requiring the operating system 502 to grant access.

In many embodiments, the virus detection software 506 obtains one or more files or data blocks that contain one or more virus patterns. The virus pattern(s) file(s) may be referred to as virus signature file(s). For ease of explanation, the virus patterns will be referred to as a single signature file. The virus detection software 506 may receive the signature file from remote anti-virus service 512 in remote computer platform 510. In many embodiments, manageability engine 508 utilizes the signature file to compare the patterns within the signature file to patterns within other files stored in the platform. If there is a pattern match for a particular file, the manageability engine 508 will determine that the file has a virus. The signature file may be a large file because there are many viruses in existence and all known patterns would be stored in the file. In many embodiments that were discussed in Figures 1 and 2, the manageability engine 508 would store the signature file in local manageability engine 508 firmware storage.

The local firmware storage may not be of sufficient size to store the large signature file. Thus, the signature file may be stored in system memory 504. When the signature file is stored in system memory 504, a security mechanism is desirable to secure the signature file so it will not be compromised by malicious programs and viruses running in the operating system 502.

In many embodiments, the signature file may be stored on a hard disk drive or other mass storage device such as storage medium 520. In these embodiments, when the manageability engine 508 begins a virus scan, it may load the signature file from the storage medium 520 into the memory 504.

In many embodiments, the remote computer platform 510 signs the signature file with a vendor private key 518 and then pushes the signature file to the local computer platform 500. Thus, the signed signature file may be stored within the storage medium 520 as signed signature file 522a or stored in the memory 504 as signed signature file 522b. The vendor private key is a key assigned to the virus software vendor. The signing may comprise the remote computer platform 510 utilizing a hash with the private key on the file, which would provide a unique pattern that could be validated using a public key.

The signed signature file 522 may then be sent to the storage medium 520 (file 522a) or to the memory 504 (file 522b) (communication A). If the signature file is first sent to storage medium 520, then the file is subsequently sent from the storage medium 520 to the memory 504 when the file is to be utilized for a virus scan by the manageability engine 508. The virus detection software 506 then notifies the manageability engine 508 (communication B) that the signed signature file 522b was loaded into memory 504. In many embodiments, the virus detection software 506 also may provide the specific location in memory where the signature file 522b was loaded.

The manageability engine 508 then checks memory 504 for the signature file 522b (communication C) and validates the authenticity of the file by using the trusted public key 524 stored in the manageability engine 508. In many embodiments, the trusted public key 524 may be stored within the manageability engine 508 by a trusted party such as an IT administrator. If the signature file 522b is valid, then the manageability engine 508 can use the patterns stored within the file to perform a virus scan on one or more files. The files to be scanned may be stored within storage medium 520, within memory 504 (e.g. communication D), or elsewhere in the platform. In many embodiments, the manageability engine 508 can search a blacklist (known malicious patterns) from the signature file to locate those patterns stored elsewhere in the platform.

In many embodiments, if the manageability engine 508 finds a virus or other malicious piece of code present, the manageability engine 508 can then alert the user or a remote agent through an OOB channel of the presence of the virus/malicious code.

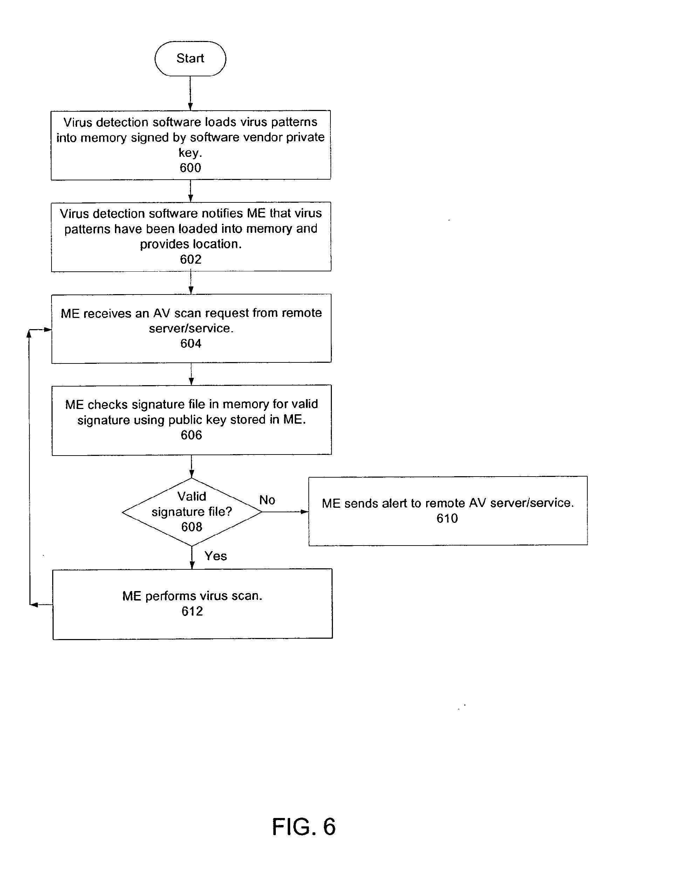

**Figure 6** is a flow diagram of a process to provide secure virus pattern storage in system memory according to several embodiments. The process may be performed by processing logic which may be hardware (e.g. components within a general purpose computer system), software (e.g. instructions stored within a memory), or a combination of both hardware and software. The components discussed in the process relate to the components shown in Figure 5. Turning now to Figure 6, the process begins by processing logic in the virus detection software loading virus patterns into memory signed by the software vendor private key (processing block 600).

Once the virus patterns (i.e. the signature file) have been loaded into memory, then processing logic in the virus detection software notifies the ME that the virus patterns have been loaded into memory (processing block 602). In many embodiments, this notification also provides the ME with the location in memory where the patterns are located. Then processing logic in the ME receives an AV scan request from a remote server or service (processing block 604).

After receiving the request, processing logic in the ME checks the signature file in memory for a valid signature (e.g. validating the integrity of the patterns) using a public key stored within the ME (processing block 606). Then processing logic determines if the signature file is valid based on the check (processing block 608).

If the signature file is not valid, then processing logic in the ME sends an alert to the remote AV server or service (processing block 610).

Otherwise if the signature file is valid, then processing logic in the ME can utilize the signature file to perform a virus scan (processing block 612). After the scan, processing logic can return to block 604.

Thus, embodiments of a device, system, and method to provide a secure platform-based hardware anti-virus scanning service are disclosed. These embodiments have been described with reference to specific exemplary embodiments thereof. It will be evident to persons having the benefit of this disclosure that various modifications and changes may be made to these embodiments without departing from the broader spirit and scope of the embodiments described herein. The specification and drawings are, accordingly, to be regarded in an illustrative rather than a restrictive sense.

## Claims

1. A system, comprising:
an out-of-band channel;
a remote computer platform, coupled to the out-of-band channel, to send a virus signature file to a local computer platform across the channel; and
the local computer platform, coupled to the out-of-band channel, including a storage medium to store a plurality of files; and
a manageability engine to receive the virus signature file from the remote computer platform; and
perform an anti-virus scan using one or more patterns in the signature file to compare to one or more of the plurality of files stored in the storage medium.

2. The system of claim 1, wherein the system further comprises:
a chipset, wherein the manageability engine is integrated into the chipset and includes firmware to store meta-data for one or more of the plurality of files, the meta-data mapping the one or more files to one or more locations within the storage medium.

3. The system of claim 2, wherein the manageability engine is further operable to:
request block information related to one or more of the plurality of files from the storage medium using the locations mapped from the meta-data; and
reconstruct the files from the block information in a secure location for the anti-virus scan.

4. The system of claim 3, wherein the local computer platform further comprises:
a filter driver to determine when a file of the plurality of files is modified; and
send the meta-data corresponding to the modified file to the manageability engine firmware.

5. The system of claim 1, wherein the firmware is further operable to store:
a file system driver to mount a file system from the storage medium into a partition; and
a storage medium driver to communicate with the storage medium.

6. The system of claim 5, wherein the local computer platform further comprises a controller to control access to the storage medium, wherein the manageability engine communicates with the controller using the storage medium driver.

7. The system of claim 6, wherein the manageability engine is further operable to:
receive a request from the external agent to perform a virus scan on at least one of the one or more files; and
perform the virus scan on the at least one of the one or more files using the mounted partition.

8. The system of claim 2, wherein the firmware is further operable to store the signature file.

9. The system of claim 1, wherein the local computer platform further comprises a virus detection agent to:
securely sign the signature file using a private security key assigned to the agent; and
store the signed signature file in a portion of a memory in the local computer platform.

10. The system of claim 9, wherein the manageability engine is further operable to:
store a public security key locally within the manageability engine;
determine the location of the signed signature file in the memory; and
determine the validity of the signature file using the stored public key.

11. A method, comprising:
sending from a local computer platform to a remote computer platform a request to perform a virus scan on a file stored in a storage medium in the local computer platform;
sending from the remote computer platform to a manageability engine in the local computer platform a request for the file;
the manageability engine retrieving the file from the storage medium;
sending the file from the manageability engine to the remote computer platform;
scanning the file for one or more viruses upon the file arriving at the remote computer platform; and
sending the results of the virus scan from the remote computer platform to the local computer platform.

12. The method of claim 11, further comprising:
gaining access to the storage medium in the local computer platform through a filter driver located in the local computer platform.

13. The method of claim 12, further comprising:
measuring the filter driver using a service running in the manageability engine to determine whether the filter driver is secure.

14. The method of claim 11, further comprising:
measuring one or more critical runtime components within the local computer platform using a service running in the manageability engine to determine whether the one or more critical runtime components are secure.

15. The method of claim 14, further comprising:
aborting retrieving the file from the storage medium when at least one of the one or more critical runtime components were determined to not be secure; and
sending a security breach notification to the remote computer platform.
